# EUROPÄISCHE PATENTSCHRIFT

(11) **EP 2 126 321 B1**
(45) Veröffentlichungstag und Bekanntmachung des Hinweises auf die Patenterteilung: **29.12.2010**
(21) Anmeldenummer: 08706811.0
(22) Anmeldetag: 26.01.2008
(51) Int. Cl.: F02K 1/38

(54) **GASTURBINE MIT EINEM NACHLEITKRANZ UND MIT EINEM MISCHER**
GAS TURBINE COMPRISING A GUIDE RING AND A MIXER
TURBINE À GAZ PRÉSENTANT UNE COURONNE DIRECTRICE ET UN MÉLANGEUR

(30) Priorität: 31.01.2007 DE 102007004741
(43) Veröffentlichungstag der Anmeldung: 02.12.2009
(73) Patentinhaber: MTU Aero Engines GmbH, 80995 München (DE)
(72) Erfinder: RAMM, Günter, 82223 Eichenau (DE)
(86) Internationale Anmeldenummer: PCT/DE2008/000144
(87) Internationale Veröffentlichungsnummer: WO 2008/092427

(56) Entgegenhaltungen:
- US-A- 3 377 804
- US-A- 3 712 062
- US-A1- 2006 010 852

## Beschreibung

Die Erfindung betrifft eine Gasturbine mit mindestens einem von einer Turbine angetriebenen Rotor und mit einem Stator, mit stromabwärts der Turbine oder der hintersten Turbine statorfest angeordneten, einen Nachleitkranz bildenden Streben sowie mit einem am stromabwärtigen Ende des Heißgaskanals angeordneten Mischer, gemäß dem Oberbegriff des Patentanspruches 1.

Bei Gasturbinen, welche als Flugtriebwerke zum Einsatz kommen, wird der aus der hintersten Turbinenstufe austretende, in aller Regel drallbehaftete Heißgasstrom üblicherweise mit Hilfe eines statorfesten Nachleitkranzes, auch Nachleitrad genannt, in Axialrichtung umgelenkt. Daraus resultiert eine Erhöhung des Axialschubes, weiterhin wird die Torsionsbelastung der Triebwerksaufhängung und somit der Flugzeugzelle reduziert. Bei Fan-Triebwerken sind derartige Nachleitkränze mit profilierten Streben auch stromabwärts des ggf. den Hauptschubanteil erzeugenden Fans im "kalten" Bypassstrom üblich.

Bekannte Vorrichtungen zur Lärmreduzierung an Flugtriebwerken und sonstigen Gasturbinen sind sogenannten Mischer. Diese mischen dem aus dem Turbinenbereich austretenden, hochenergetischen Heißgasstrom Umgebungsluft mit geringerer Energie, d.h. mit erheblich geringerer Temperatur und geringerer Geschwindigkeit zu. Bei Triebwerken mit einem Nebenstrom/Bypass wird dem Heißgasstrom Bypassluft zugemischt. In der Regel strahlt der entstehende Mischstrom dann weniger Lärm ab, als der ungemischte Heißgasstrom. Bei militärischen Fluggeräten werden Mischer auch zur Reduktion der Infrarotsignatur des Abgasstrahls benutzt, um die Ortung des Fluggeräts zu erschweren. Mischer sind in der Regel statische sowie passive Vorrichtungen ohne eigene Energieversorgung. Mit zunehmendem Mischungsgrad steigen in der Regel auch die Strömungsverluste. Ein guter Mischer stellt somit einen Kompromiss zwischen diesen beiden Effekten dar.

Die am meisten verwendete Bauform ist wohl der sogenannte Blütenmischer, benannt nach der blütenähnlichen Geometrie bei Ansicht von hinten. Bei dieser Bauform folgen radiale Erhebungen und Vertiefungen wellenförmig aufeinander und führen in sich geschlossen zumindest näherungsweise zwischen Kreisbahnen um einen Mittelpunkt herum. In den Erhebungen wird Heißgas radial nach Außen gelenkt, in den Vertiefungen wird Umgebungsluft radial nach Innen geführt. Siehe hierzu beispielsweise die Patentschrift US 4,819,425.

Eine weitere Bauform ist nach Art eines Kegelmantel mit über den Umfang verteilten Öffnungen gestaltet und wird auch als Lochmischer bezeichnet Siehe hierzu die Offenlegungsschrift DE 101 45 489 A1.

Es gibt auch Mischformen zwischen einem Blüten- und einem Lochmischer sowie eine Vielzahl weiterer Bauformen mit sehr unterschiedlich gestalteten und verteilten Strömungskanälen. Das grundlegende Funktionsprinzip bleibt dabei in der Regel erhalten.

Das Dokument US-A-3 377 804 offenbart eine Bauform, bei der der Nachleitkranz und der Mischer konstruktiv sowie strömungstechnisch zusammengefasst sind, und die Streben des Nachleitkranzes im Bereich ihrer radial äußeren Enden mit der Wandstruktur des Mischers verbunden sind.

Demgegenüber besteht die Aufgabe der Erfindung darin, dieses Prinzip in der Weise auf einen Blütenmischer zu übertragen , dass bei höherem Triebwerkswirkuugsgrad Einsparungen an Baulänge, Gewicht und Teilezahl erzielt werden.

Diese Aufgabe wird durch die in Anspruch 1 gekennzeichneten Merkmale gelöst, in Verbindung mit den gattungsbildenden Merkmalen in dessen Oberbegriff.

Die Erfindung besteht darin, dass jede Strebe des Nachleitkranzes im Bereich ihres radial äußeren Endes zumindest großteils mit einer radialen Vertiefung der Wandstruktur des Mischers verbunden ist. Somit liegt ein Kombinationselement aus Nachleitkranz und Mischer vor, das sich durch geringere Baulänge, weniger Gewicht, weniger Teile und höhere strukturmechanische Belastbarkeit auszeichnet. Durch Verkleinerung der strömungsbeaufschlagten Kanaloberflächen ist auch eine Verbesserung des Wirkungsgrades zu erwarten.

Bevorzugte Ausgestaltungen der Erfindung sind in den Unteransprüchen gekennzeichet.

Die Erfindung wird anschließend anband der Zeichnungen noch näher erläutert. Dabei zeigen in vereinfachter, mehr schematischer Darstellung:
Figur 1 einen Teillängsschnitt durch eine Gasturbine im Austrittsbereich ihres Heißgaskanals,
Figur 2 eine Teilansicht der Gasturbine gemäß Figur 1 in Axialrichtung von hinten,
Figur 3 einen Teilschnitt durch die Gasturbine gemäß dem Scbnittverlauf A-A in Figur 1, und
Figur 4 einen Teilschnitt durch die Gasturbine gemäß dem Schnittverlauf B-B in Figur 1.

Eine Kombination aus den strömungsbeeinflussenden Elementen Nachleitkranz 6 und Mischer 8 ist primär für als Flugtriebwerke ausgeführte Gasturbinen von Interesse, bei denen ein optimierter, drallfreier Axialschub sowie eine minimierte Lärmemission von Bedeutung sind. Unter den Flugtriebwerken sind es insbesondere die zivilen Fan-Triebwerke, also Nebsnstrom-Triebwerke, welche diesen Kriterien genügen müssen. Das schließt aber nicht aus, dass die Erfindung auch für stationäre Gasturbinen bzw. Nicht-Fluggasturbinen vorteilhaft sein kann.

In den Figuren ist ausschließlich eine Variante mit einem als Blütenmischer ausgeführten Mischer 8 dargestellt.

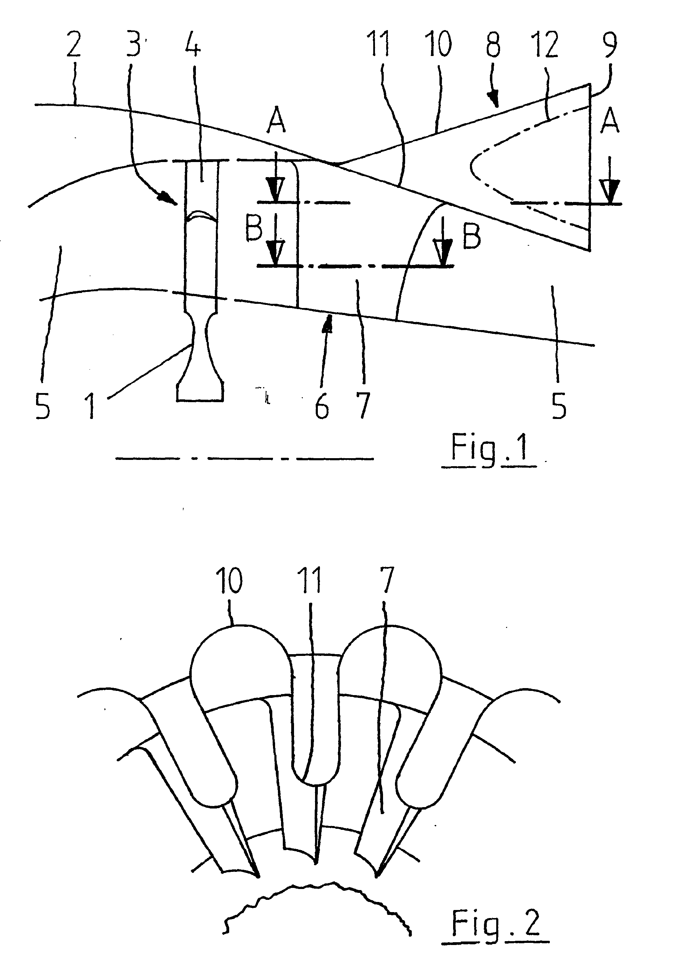

Die Gasturbine bzw. das Flugtriebwerk gemäß Figur 1 umfasst mindestens einen Rotor 1 sowie einen den Rotor 1 aufnehmenden Stator 2. Von der den Rotor 1 antreibenden Turbine 3 ist nur ein Laufschaufelkranz 4 dargestellt. Falls mehrere Turbinen sowie Rotoren vorhanden sind, soll es sich bei der Turbine 3 um die am weitesten stromabwärts positionierte Niederdruckturbine handeln sowie um den am weitesten stromabwärts angeordneten Laufschaufelkranz 4. Der Heißgaskanal 5 wird von links nach rechts durchströmt und endet am stromabwärtigen Ende des Mischers 8. Das mit Drall, d.h. mit einer relevanten Umfangskomponente, aus dem hintersten Laufschaufelkranz 4 austretende Heißgas wird von den profilierten und gekrümmten, i.w. radial angeordneten Streben 7 des Nachleitkranzes in Axialrichtung umgelenkt und ist somit möglichst drallfrei. Der Nachleitkranz 6 und der Mischer 8 sind zu einer konstruktiven und funktionalen Einheit kombiniert, wobei die radial äußeren Enden der Streben 7 mit der Wandstruktur 9 des Mischers 8 verbunden sind. Der Mischer 8 weist in Umfangsrichtung aufeinanderfolgend radiale Erhebungen 10 und Vertiefungen 11 auf, welche mäanderförmig zwischen -gedachten- zumindest annähernd rotationssymmetrischen Begrenzungsflächen, z. B. Kegel- oder Zylinderflächen, verlaufen und eine blütenähnliche Geometrie erzeugen. Dabei tauchen die Vertiefungen 11 in den Heißgasstrom, die Erhebungen 10 in den umgebenden LuftstromlMantelstrom ein und bewirken stromabwärts die gewünschte Vermischung der Strömungsmedien. Optional können in der Wandstruktur 9 des Mischers 8 Aussparungen 12 (strichpunktiert) und/oder Löcher sowie weitere Kanalelemente vorhanden sein, welche zusätzliche Mischvorgänge bewirkten. Jede Strebe 7 ist an ihrem radial äußeren Ende zumindest großteils mit einer Vertiefung 11 der Wandstruktur 9 verbunden. Die Anzahl der Vertiefungen 11 kann gleich oder ein ganzzahliges Vielfaches der Anzahl der Streben 7 sein.

Gemäß Figur 2 stimmt die Anzahl der Vertiefungen 11 - und die Anzahl der Erhebungen 10 - mit der Anzahl der Streben 7 überein, d.h. jeder Vertiefung 11 ist eine Strebe 7 zugeordnet. Hier ist auch gut die Blütengeometrie des Mischers 8 zu erkennen.

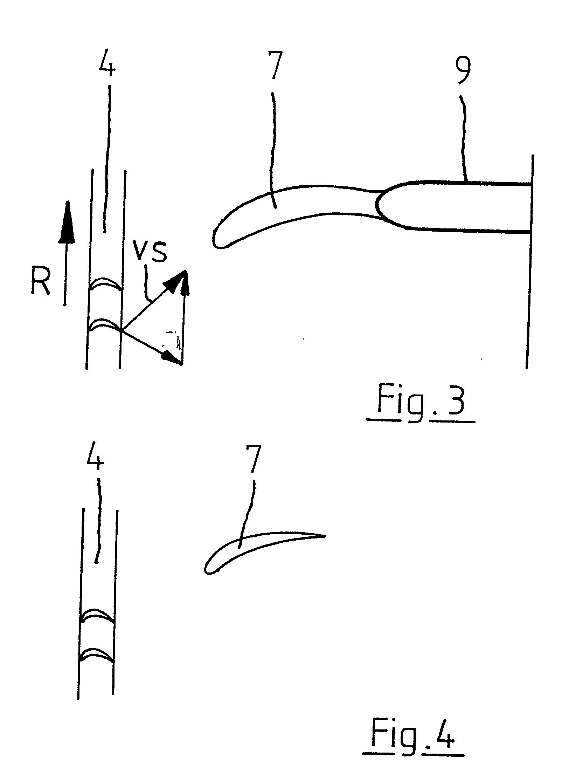

Figur 3 ergibt sich durch einen horizontalen Teilschnitt gemäß dem Verlauf A-A in Figur 1. Links ist der Laufschaufelkranz 4 mit seiner Rotationsrichtung 4 und einem Geschwindigkeitsdreieck auf seiner Austrittsseite zu erkennen. Der resultierende Geschwindigkeitsvektor vs in einem statorfesten Bezugssystem ist von links unten nach rechts oben gerichtet. Die strömungsumlenkende Strebe 7 ist so gekrümmt, dass die Richtung des Geschwindigkeitsvektors vs etwa tangential zur Profilmittellinie der Strebe 7 im Bereich ihrer Eintrittskante verläuft, damit eine günstige, möglichst verlustarme Anströmung erfolgt. Bei der Darstellung gemäß Figur 3 ist zu bedenken, dass im Übergangsbereich von der Strebe 7 zur Wandstruktur 9 des Mischers 8 entsprechende Übergangsradien vorhanden sind, so dass die Austrittskante der Strebe 7 in dieser radialen Höhe nicht scharfkantig ist.

Figur 4 zeigt einen horizontalen Teilschnitt gemäß dem Schnittverlauf B-B in Figur 1, d.h. in geringerer radialer Höhe. Hier ist gut zu erkennen, dass die Strebe 7 ein strömungsgünstiges Profil mit einer scharfen Austrittskante sowie mit einer axialen, hier horizontalen, Strömungsaustrittsrichtung aufweist. Dies gilt annähernd für die gesamte radiale Höhe jeder Strebe 7.

An ihren radial inneren Enden können die Streben beispielsweise über ein ringartiges Element verbunden bzw. in der innen Statorstruktur befestigt bzw. geführt sein. Dies ist ohne Belang für das Prinzip der Erfindung.

## Patentansprüche

1. Gasturbine, insbesondere Flugtriebwerk, mit mindestens einem von einer Turbine (3) angetriebenen Rotor (1) und mit einem Stator (2), mit stromabwärts der Turbine (3) oder der hintersten Turbine statorfest angeordneten, einen Nachleitkranz (6) zur Umlenkung des drallbehafteten Heißgasstrom bildenden Streben (7) sowie mit einem am stromabwärtigen Ende des Heißgaskanals (5) angeordneten Mischers (8) in Form eines sogenannten Blütenmischers mit über seinen Umfang abwechselnden, radialen Erhebungen (10) und Vertiefungen (11), wobei der Nachleitkranz (6) und der Mischer (8) konstruktiv sowie strömungstechnisch zusammengefasst sind, und wobei die Streben (7) des Nachleitkranzes (6) im Bereich ihrer radial äußeren Enden mit der Wandstruktur (9) des Mischers (8) verbunden sind,
**dadurch gekennzeichnet,**
**dass** jede Strebe (7) des Nachleitkranzes (6) im Bereich ihres radial äußeren Endes zumindest großteils mit einer radialen Vertiefung (11) der Wandstruktur (9) des Mischers (8) verbunden ist

2. Gasturbine nach Anspruch 1, **dadurch gekenntzeichnet dass** die Streben (7) des Nachleitkranzes (6) im stromaufwärtigen Teil des Mischers (8) mit dessen Wandstruktur (9) verbunden sind.

3. Gasturbine nach Anspruch 1 oder 2, **dadurch gekennzeichnet, dass** die Streben (7) des Nachleitkranzes (6) integral mit der Wandstruktur (9) des Mischers (8) verbunden sind.

4. Gasturbine nach einem der Ansprüche 1 bis 3, **dadurch gekennzeichnet, dass** die Anzahl der radialen Vertiefungen (11) des Mischers (8) gleich, oder ein ganzzahliges Vielfaches der Anzahl der Streben (7) des Nachleitktamzes (6) ist.

5. Gasturbine nach einem der Ansprüche 1 bis 4, **dadurch gekennzeichnet, dass** jeweils im Übergangsbereich von den radialen Vertiefungen (11) zu den radialen Erhebungen (10) in der Wandstruktur (9) bis zum stromabwärtigen Ende des Mischers (8) reichende, keilartige Aussparungen (12) vorhanden sind.

## Claims

1. A gas turbine, in particular aircraft engine, comprising at least one rotor (1) driven by a turbine (3) and comprising a stator (2) with struts (7) fixed to the stator, arranged downstream of the turbine (3) or of the rearmost turbine, forming a guide ring (6) for deflecting the swirling hot gas flow, and comprising a mixer (8) arranged on the downstream end of the hot gas duct (5) in the form of a so-called bloom mixer with alternate radial raised portions (10) and recesses (11) over its circumference, the guide ring (6) and the mixer (8) being combined structurally and in terms of flow technology, and the struts (7) of the guide ring (6) being connected in the region of their radial outer ends to the wall structure (9) of the mixer (8),
**characterised in that**
each strut (7) of the guide ring (6) is connected in the region of its radial outer end, at least for the most part, to a radial recess (11) of the wall structure (9) of the mixer (8).

2. A gas turbine according to Claim 1, **characterised in that** the struts (7) of the guide ring (6) are connected in the upstream part of the mixer (8) to the wall structure (9) thereof.

3. A gas turbine according to Claim 1 or 2, **characterised in that** the struts (7) of the guide ring (6) are integrally connected to the wall structure (9) of the mixer (8).

4. A gas turbine according to one of Claims 1 to 3, **characterised in that** the number of radial recesses (11) of the mixer (8) is the same as or a whole-number multiple of the number of struts (7) of the guide ring (6).

5. A gas turbine according to one of Claims 1 to 4, **characterised in that** in the transition region from the radial recesses (11) to the radial raised portions (10), wedge-like recesses (12) are respectively present in the wall structure (9), extending as far as the downstream end of the mixer (8).

## Revendications

1. Turbine à gaz, en particulier moteur d'avion, comprenant au moins un rotor (1) entraîné par une turbine (3) et un stator (2), des barrettes (7) disposées de façon solidaire du stator en aval de la turbine (3) ou de la turbine la plus en arrière, formant une couronne directrice postérieure (6) pour la déviation du flux de gaz chaud entaché de torsion et un mélangeur (8) disposé sur l'extrémité en aval du canal de gaz chaud (5) sous la forme d'un mélangeur en forme de fleur avec des élévations (10) et des cavités (11) radiales, alternant sur son pourtour, la couronne directrice postérieure (6) et le mélangeur (8) étant regroupés par construction et par l'écoulement, et les barrettes (7) de la couronne directrice postérieure (6) étant reliées dans la zone de leurs extrémités radiales extérieure à la structure de paroi (9) du mélangeur (8), **caractérisée en ce que** chaque barrette (7) de la couronne directrice postérieure (6) est reliée dans la zone de son extrémité radialement extérieure au moins en grande partie à une cavité (11) radiale de la structure de paroi (9) du mélangeur (8).

2. Turbine à gaz selon la revendication 1, **caractérisée en ce que** les barrettes (7) de la couronne directrice postérieure (6) sont reliées dans la partie en amont du mélangeur (8) à la structure de paroi (9) du mélangeur.

3. Turbine à gaz selon la revendication 1 ou 2, **caractérisée en ce que** les barrettes (7) de la couronne directrice postérieure (6) sont reliées intégralement à la structure de paroi (9) du mélangeur (8).

4. Turbine à gaz selon l'une quelconque des revendications 1 à 3, **caractérisée en ce que** le nombre de cavités (11) radiales du mélangeur (8) est identique ou est un multiple entier du nombre des barrettes (7) de la couronne directrice postérieure (6).

5. Turbine à gaz selon l'une quelconque des revendications 1 à 4, **caractérisée en ce qu'**à chaque fois des évidements (12) en forme de coin, allant jusqu'à l'extrémité côté aval du mélangeur (8), sont présents dans la zone de transition allant des cavités (11) radiales aux élévations (10) radiales dans la structure de paroi (9).
